# EUROPEAN PATENT APPLICATION

(11) **EP 3 742 809 A1**
(43) Date of publication of application: **25.11.2020**
(21) Application number: 18901084.6
(22) Date of filing: 19.01.2018
(51) Int. Cl.: H04W 36/30, H04W 36/08

(54) **METHOD FOR CONFIGURING SECONDARY CELL, DEVICE AND COMPUTER STORAGE MEDIUM**

(71) Applicant: GUANGDONG OPPO MOBILE TELECOMMUNICATIONS CORP., LTD., Wusha, Chang'an Dongguan, Guangdong 523860 (CN)
(72) Inventor: YANG, Ning, Dongguan, Guangdong 523860 (CN)
(74) Representative: Ziebig & Hengelhaupt Patent- und Rechtsanwaltskanzlei PartG mbB
(86) International application number: PCT/CN2018/073335
(87) International publication number: WO 2019/140620

(57) **Abstract**

Provided are a method for configuring a secondary cell, a device and a computer storage medium. The method comprises: receiving measurement configuration information, the measurement configuration information comprising measurement frequency point information and determination basis information; measuring measurement cells according to the measurement frequency point information; on the basis of identities of the measurement cells and the determination basis information, determining a cell set corresponding to each node and a measurement result of each cell; reporting the cell set corresponding to each node and the measurement result of each cell, the cell set corresponding to each node and the measurement result of each cell being used for a master node (MN), at the same time as configuring a master cell group (MCG) for a UE, to also determine a secondary cell group (SCG) of a secondary node (SN) according to the cell set corresponding to each node and the measurement result of each cell, and configure the secondary cell group (SCG) of the secondary node (SN) for the UE. The present invention thus obviates the need to trigger the MN to independently configure the SCG for the UE, thereby reducing secondary cell configuration delay.

## Description

### TECHNICAL FIELD

Embodiments of the disclosure relate to the field of wireless communication technologies, and particularly to a method and device for secondary cell configuration and a computer storage medium.

### BACKGROUND

At present, User Equipment (UE) with a dual connectivity capability may perform data reception or transmission with two nodes (or base Stations) at the same time. One of the two nodes is responsible for transmitting a Radio Resource Control (RRC) message to the UE and also responsible for interacting with a control-plane network element of a core network, and the node may be called a Master Node (MN). The other of the two nodes may be called a Secondary Node (SN). The UE with the dual connectivity capability, during handover of a service node or during switching from an idle state to a connected state, usually configures a connection with the MN at first; and after the UE is connected to the MN, the MN triggers configuration of a connection between the UE and a Secondary Cell Group (SCG) of the SN. It can be seen from the abovementioned solution that at present, the connections of the UE with the dual connectivity capability are required to be configured twice, which results in excessively long time for establishment of the connections between the UE with the dual connectivity capability and the nodes, and increases a delay of dual connectivity configuration under the condition that the UE with the dual connectivity capability performs handover of a node or is switched from the idle state to the connected state.

### SUMMARY

The embodiments of the disclosure provide a method and device for secondary cell configuration and a computer storage medium, which can reduce a delay of dual connectivity configuration under the condition that a UE with a dual connectivity capability performs handover of a node or is switched from an idle state to a connected state.

The technical solutions of the embodiments of the disclosure are implemented as follows.

In a first aspect, the embodiments of the disclosure provide a method for secondary cell configuration, which is applied to a UE and includes the following operations.

Measurement configuration information is received, here, the measurement configuration information includes: measurement frequency information, and determination criterion information configured to determine correspondences between nodes and cells.

At least one measured cell is obtained through measurement according to the measurement frequency information.

A respective cell set corresponding to each node and a measurement result of each cell are determined based on an identifier of the at least one measured cell and the determination criterion information.

The respective cell set corresponding to each node and the measurement result of each cell are reported, here, the respective cell set corresponding to each node and the measurement result of each cell are used by an MN to configure a Master Cell Group (MCG) for the UE, and to determine an SCG of an SN and configure the SCG of the SN for the UE.

In a second aspect, the embodiments of the disclosure provide a method for secondary cell configuration, which is applied to a source MN and includes the following operations.

Measurement configuration information is transmitted to a UE, here, the measurement configuration information includes: measurement frequency information, and determination criterion information configured to determine correspondences between nodes and a cells.

A respective cell set corresponding to each node and a measurement result of each cell, which are reported by the UE according to the measurement frequency information and the determination criterion information, are received.

The respective cell set corresponding to each node and the measurement result of each cell as well as configuration indication information are transmitted to a target MN, here, the configuration indication information is configured to instruct the target MN to configure an MCG for the UE and configure an SCG for the UE based on the respective cell set corresponding to each node and the measurement result of each cell.

In a third aspect, the embodiments of the disclosure provide a method for secondary cell configuration, which is applied to an MN to be connected and includes the following operations.

Measurement configuration information is transmitted to a UE, here, the measurement configuration information includes: measurement frequency information, and determination criterion information configured to determine correspondences between nodes and cells.

An MCG and SCG corresponding to the MN, an SN capable of performing configuration of dual connectivity together with the MN and an SCG corresponding to the SN, which are transmitted by the UE based on the measurement frequency information and the determination criterion information, are received.

An MCG and an SCG are configured for the UE based on the MCG and SCG corresponding to the MN, the SN and the SCG corresponding to the SN.

In a fourth aspect, the embodiments of the disclosure provide a UE, which includes a first receiving portion, a measurement portion, a determination portion and a reporting portion.

The first receiving portion is configured to receive measurement configuration information, here, the measurement configuration information includes: measurement frequency information, and determination criterion information configured to determine correspondences between nodes and cells.

The measurement portion is configured to obtain at least one measured cell through measurement according to the measurement frequency information.

The determination portion is configured to determine a respective cell set corresponding to each node and a measurement result of each cell based on an identifier of the at least one measured cell and the determination criterion information.

The reporting portion is configured to report the respective cell set corresponding to each node and the measurement result of each cell, here, the respective cell set corresponding to each node and the measurement result of each cell are used by an MN to configure an MCG for the UE, and to determine an SCG of an SN and configure the SCG of the SN for the UE.

In a fifth aspect, the embodiments of the disclosure provide a network device, which includes a first sending portion and a second receiving portion.

The first sending portion is configured to transmit measurement configuration information to a UE, here, the measurement configuration information includes: measurement frequency information, and determination criterion information configured to determine correspondences between nodes and cells.

The second receiving portion is configured to receive a respective cell set corresponding to each node and a measurement result of each cell, which are reported by the UE according to the measurement frequency information and the determination criterion information.

The first sending portion is further be configured to transmit, to a target MN, the respective cell set corresponding to each node and the measurement result of each cell as well as configuration indication information, here, the configuration indication information is configured to instruct the target MN to configure an MCG for the UE and configure an SCG for the UE based on the respective cell set corresponding to each node and the measurement result of each cell.

In a sixth aspect, the embodiments of the disclosure provide a network device, which includes a second sending portion, a third receiving portion and a configuration portion.

The second sending portion is configured to transmit measurement configuration information to a UE, here, the measurement configuration information includes: measurement frequency information, and determination criterion information configured to determine correspondences between nodes and cells.

The third receiving portion is configured to receive an MCG and SCG corresponding to an MN, an SN capable of performing configuration of dual connectivity together with the MN and an SCG corresponding to the SN, which are transmitted by the UE based on the measurement frequency information and the determination criterion information.

The configuration portion is configured to configure an MCG and an SCG for the UE based on the MCG and SCG corresponding to the MN, the SN and the SCG corresponding to the SN.

In a seventh aspect, the embodiments of the disclosure provide a UE, which includes a first network interface, a first memory and a first processor.

The first network interface is configured to receive or transmit a signal in a process of performing information reception or transmission with another external network element.

The first memory is configured to store computer programs capable of being run on the first processor.

The first processor is configured to run the computer programs to execute the operations of the method in the first aspect.

In an eighth aspect, the embodiments of the disclosure provide a network device, which includes a second network interface, a second memory and a second processor.

The second network interface is configured to receive or transmit a signal in a process of performing information reception or transmission with another external network element.

The second memory is configured to store computer programs capable of being run on the second processor.

The second processor is configured to run the computer programs to execute the operations of the method in the second aspect or the third aspect.

In a ninth aspect, the embodiments of the disclosure provide a computer storage medium, which stores information transmission programs that, when executed by at least one processor, to implement the operations of the method in the first aspect or the second aspect or the third aspect.

According to the method and device for secondary cell configuration and computer storage medium provided in the embodiments of the disclosure, the UE, after obtaining the determination criterion information configured to determine a cell corresponding to a node, determines the node(s) corresponding to the at least one measured cell obtained through measurement and reports the respective cell set corresponding to each node and the measurement result of each cell to enable the MN to configure a connection with the UE and configure the SCG of the SN according to the respective cell set corresponding to each node and the measurement result of each cell. Therefore, it is unnecessary to trigger a process that the MN independently configures the SCG for the UE, and thus a delay of secondary cell configuration is reduced.

### BRIEF DESCRIPTION OF THE DRAWINGS

FIG. 1 is a structure diagram of a communication system according to an embodiment of the disclosure.
FIG. 2 is a structure diagram of another communication system according to an embodiment of the disclosure.
FIG. 3 is a flowchart of a method for secondary cell configuration according to an embodiment of the disclosure.
FIG. 4 is a flowchart of another method for secondary cell configuration according to an embodiment of the disclosure.
FIG. 5 is a flowchart of yet another method for secondary cell configuration according to an embodiment of the disclosure.
FIG. 6 is a composition diagram of a UE according to an embodiment of the disclosure.
FIG. 7 is a composition diagram of another UE according to an embodiment of the disclosure.
FIG. 8 is a hardware structure diagram of a UE according to an embodiment of the disclosure.
FIG. 9 is a composition diagram of a network device according to an embodiment of the disclosure.
FIG. 10 is a composition diagram of another network device according to an embodiment of the disclosure.
FIG. 11 is a specific hardware structure diagram of a network device according to an embodiment of the disclosure.

### DETAILED DESCRIPTION

For making the characteristics and technical contents of the embodiments of the disclosure understood in more detail, implementation of the embodiments of the disclosure will be described below in combination with the drawings in detail. The drawings are only adopted for description as references and not intended to limit the embodiments of the disclosure.

It is to be noted that the technical solutions of the embodiments of the disclosure may be applied to various communication systems, for example, a Long Term Evolution (LTE) system, an evolved system of the LTE system such as an Advanced Long Term Evolution (LTE-A) system, a New Radio (NR) system, an evolved system of the NR system such as an NR-based access to unlicensed spectrum (NR-U) system, or a next-generation communication system.

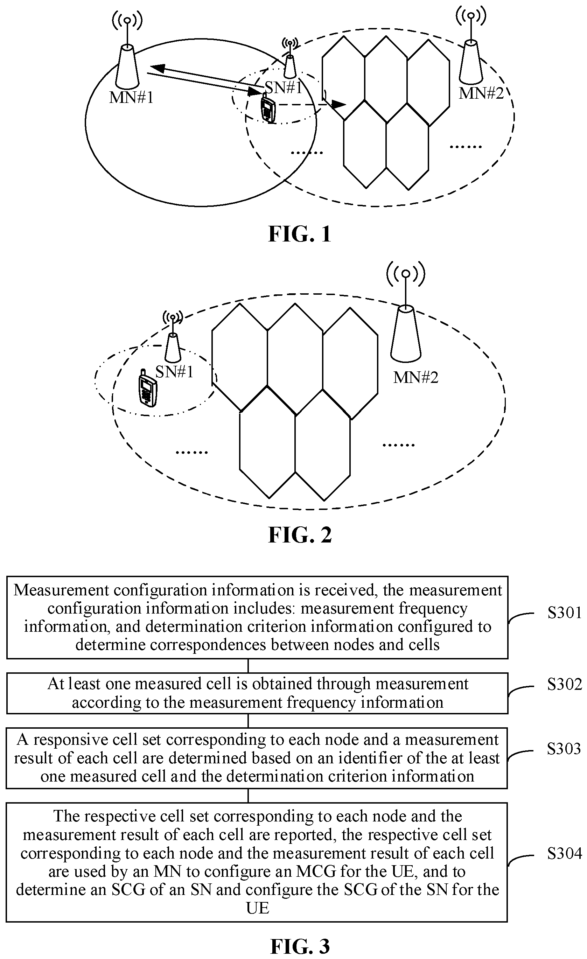

Generally, referring to FIG. 1, an atypical exemplary structure of a communication system that the technical solutions of the embodiments of the disclosure may be applied to is illustrated. The communication system may consist of a UE, a source MN#1, a target MN#2 and a target SN#1. Each of the nodes may be a fixed station configured to communicate with the UE through a wireless communication link, or may be an Evolutional Node B (eNB or eNodeB) in LTE, or a relay station, or a vehicle device, a wearable device, a network device in an NR network such as a 5th-Generation (5G) base station (gNB), a network device in a future evolved Public Land Mobile Network (PLMN) or the like. Each access point may provide communication coverage for a specific geographic region. For example, as illustrated in FIG. 1, the source MN#1 may provide coverage for a geographic region illustrated as the solid circle, and the target MN#2 may provide coverage for a geographic region illustrated as the dotted circle. It can be understood that the geographic region that the node provides communication coverage for may be called a "cell", each node may provide coverage for different specific geographic regions at different frequencies and thus each node may provide communication coverage for multiple cells. It is to be noted that multiple cells that the target MN#2 provides coverage for may be called a target MCG illustrated as the solid rhombuses in FIG. 1. Moreover, the target SN#1 may also provide communication coverage for multiple cells, and thus the multiple cells that the target SN#1 provides coverage for may be called a target SCG illustrated as the chain dotted lines in FIG. 1.

In FIG. 1, the UE may be fixed or mobile, and may also be called an access terminal, a user unit, a user station, a mobile radio station, a mobile station, a remote station, a remote terminal, a mobile device, a user terminal, a terminal, a wireless communication device, a user agent or a user device. The terminal device may be a station (ST) in a Wireless Local Area Network (WLAN), or may be a cell phone, a cordless phone, a Session Initiation Protocol (SIP) phone, a Wireless Local Loop (WLL) station, a Personal Digital Assistant (PDA) device, a handheld device with a wireless communication function, a computing device, another processing device connected to a wireless modem, a vehicle device, a wearable device, a terminal device in a next-generation communication system, for example, a future 5G network, a terminal device in the future evolved PLMN or the like.

The UE may communicate with one or more nodes through transmission on a downlink and an uplink. The downlink (or a forward link) means a communication link from the node to the UE, and the uplink (or a backward link) means a communication link from the UE to the node. In FIG. 1, the solid line with double arrowheads represents communication between the UE and the source MN#1. The dotted line with a single arrowhead represents that the UE tries to be handed over from a physical region covered by the source MN#1 to a physical region covered by the target MN#2.

In the communication system illustrated in FIG. 1, handover initiated by at least one of a network or the UE may be supported. For handover initiated by the network, the UE may perform handover under an instruction of the system, and the system may select a target cell for handover of the UE based on a measurement result obtained and sent to a source cell by the UE.

Based on the communication system illustrated in FIG. 1, if the UE has a dual connectivity capability, then in such case, the UE may also be connected with the SN#1 in the physical region covered by the MN#1, thereby implementing a dual connectivity mechanism. After the UE is handed over to the MN#2 and configuration of a connection with the MN#2 is completed, the MN#2 may further trigger configuration of a connection between the UE and the SN#1, so that configuration is required to be performed twice during handover of the UE from the MN#1 to the MN#2, which results in long time consumption for connection configuration during the handover procedure.

In addition, for example, in a structure of a communication system illustrated in FIG. 2, when the UE only in coverage of the MN#2 is switched from an idle state to a connected state, it is also necessary to complete configuration of the connection with the MN#2 at first, and then the MN#2 may trigger configuration of the connection between the UE and the SN#1. Therefore, during switching of the UE in the coverage of the MN#2 from the idle state to the connected state, configuration is also required to be performed twice, resulting in long time consumption for connection configuration during RRC connection state changing and increasing a delay of RRC connection state changing and dual connectivity configuration of the UE.

The above two conditions are atypical examples of application scenarios of establishment of the dual connectivity mechanism by the UE. It can be understood that the technical solutions of the embodiments of the disclosure are able to be applied to the above two scenarios and are also able to be applied to other scenarios where connection configuration is required to be performed twice for establishment of the dual connectivity mechanism by the UE. There are no elaborations made thereto in the embodiments of the disclosure.

Based on the above descriptions, referring to FIG. 3, a method for secondary cell configuration provided in an embodiment of the disclosure is illustrated. The method is applied to a UE with a dual connectivity capability. The method includes the following operations.

In S301, measurement configuration information is received, the measurement configuration information includes: measurement frequency information, and determination criterion information configured to determine correspondences between nodes and cells.

In S302, at least one measured cell is obtained through measurement according to the measurement frequency information.

In S303, a respective cell set corresponding to each node and a measurement result of each cell are determined based on an identifier of the at least one measured cell and the determination criterion information.

In S304, the respective cell set corresponding to each node and the measurement result of each cell are reported, the respective cell set corresponding to each node and the measurement result of each cell are used by an MN to configure an MCG for the UE, and to determine an SCG of an SN and configure the SCG of the SN for the UE.

Through the technical solution illustrated in FIG. 3, it can be seen that the UE, after obtaining the determination criterion information, is able to determine the at least one node corresponding to the at least one measured cell obtained through measurement, and to report the respective cell set corresponding to each node and the measurement result of each cell to enable the MN to configure a connection with the UE and configure the SCG of the SN according to the respective cell set corresponding to each node and the measurement result of each cell.

Specifically, the determination criterion information includes set node identifier information, for example, base station identifier(s), or includes at least one cell list of which identifiers include a set node identifier. Through the above two types of exemplary determination criterion information, the UE, after obtaining multiple measured cells, is able to judge whether the multiple measured cells belong to the same node or not. That is to say, cell(s) corresponding to a node is determined among the measured cell(s) obtained through measurement.

With reference to the handover scenario illustrated in FIG. 1 and the RRC connection state changing scenario illustrated in FIG. 2, there are the following two conditions in the handover scenario: 1: the UE supports single connectivity when being connected to a source MN and supports dual connectivity after being handed over to a target MN; and 2: the UE supports dual connectivity when being connected to the source MN and keeps supporting dual connectivity after being handed over to the target MN. Based on the conditions and the scenarios, the technical solution illustrated in FIG. 3 can be specifically implemented according to the following conditions respectively.

### A first condition

Under the condition that the UE supports single connectivity when being connected to the source MN and supports dual connectivity after being handed over to the target MN, the measurement configuration information is received, which includes: the measurement configuration information is received from the source MN

When the determination criterion information in the measurement configuration information includes the set node identifier information, the node identifier information is preferably a part of at least one cell identifier, so that the UE matches the identifier of the at least one cell obtained through measurement and at least one node identifier to determine the respective cell set corresponding to each node and the measurement result of each cell. Specifically, the cell identifier is preferably an Evolved Universal Terrestrial Radio Access Network (E-UTRAN) Cell Global Identifier (E-CGI) in an LTE system or an NR Cell Global Identifier (N-CGI) in a 5G NR system, and the node identifier is first 20 bits or part of bits of the preferred cell identifier, so that the node identifier is a part of the cell identifier, and then the UE determines the respective cell set corresponding to each cell and the measurement result of each cell through such a matching process.

When the determination criterion information in the measurement configuration information includes the at least one cell list of which the identifiers include the set node identifier, the cell identifiers in the same cell list include the same set node identifier, so that the UE matches the identifier of the at least one cell obtained through measurement and the at least one cell list to determine the respective cell set corresponding to each node and the measurement result of each cell.

In addition, under this condition, the method further includes the following operations. A reporting rule is received from the source MN; and responsive to detecting that the reporting rule is met, the reporting of the respective cell set corresponding to each node and the measurement result of each cell to the target MN is triggered.

For example, the reporting rule is preferably that cell signal quality is higher than a set threshold. The UE, responsive to detecting that the at least one measured cell includes a cell of which signal quality is higher than the set threshold, reports the respective cell set corresponding to each node and the measurement result of each cell to the target MN

In addition, under this condition, the method further includes the following operations. Measurement indication information is received from the source MN; and the identifier of the at least one measured cell is acquired through measuring a System Information Block (SIB) in a broadcast channel based on the measurement indication information.

In a possible implementation mode, the respective cell set corresponding to each node and the measurement result of each cell are reported, which includes: the UE reports the respective cell set corresponding to each node and the measurement result of each cell to the target MN through signaling related to a handover procedure. Then, the target MN configures an MCG corresponding to the target MN for the UE and determines an SCG corresponding to a target SN capable of performing configuration of dual connectivity together with the target MN according to the respective cell set corresponding to each node and the measurement result of each cell, and the target MN configures the SCG of the target SN for the UE.

Specifically, in the handover procedure, a measurement report that the UE reports to the source MN can include the respective cell set corresponding to each node and the measurement result of each cell, so that the source MN transmits the respective cell set corresponding to each node and the measurement result of each cell to the target MN through an X2 interface between the nodes, and also transmits configuration indication information to the target MN. The indication information is configured to instruct the target MN to configure the MCG for the UE and configure the SCG for the UE based on the respective cell set corresponding to each node and the measurement result of each cell. It can be understood that a specific implementation process of reporting the respective cell set corresponding to each node and the measurement result of each cell to the target MN will not be elaborated in the embodiment.

### A second condition

Under the condition that the UE supports dual connectivity when being connected to a source MN and keeps supporting dual connectivity after being handed over to a target MN, the measurement configuration information is received, which includes: the measurement configuration information is received from the source MN

When the determination criterion information in the measurement configuration information includes the set node identifier information, the node identifier information is identifier information of each of at least one candidate node that has a direct interface with the target MN and is capable of performing configuration of dual connectivity together with the target MN. Preferably, the identifier information of the candidate node is a part of a cell identifier. Specific means for implementing that the identifier information of the candidate node is a part of the cell identifier is as stated in the first condition and will not be elaborated herein.

When the determination criterion information in the measurement configuration information includes the at least one cell list of which the identifiers include the set node identifier, each cell identifier in the specific cell list includes the identifier of the candidate node, so that the UE performs matching according to the identifier of the at least one cell through measurement and the at least one cell list to determine a respective cell set corresponding to each candidate node and a measurement result of each cell.

In addition, under this condition, the method further includes the following operations. A reporting rule is received from the source MN; and responsive to detecting that the reporting rule is met, the reporting of the respective cell set corresponding to each node and the measurement result of each cell to the target MN is triggered.

Moreover, measurement indication information is received from the source MN; and the identifier of the at least one measured cell is acquired through measuring an SIB in a broadcast channel based on the measurement indication information.

It is to be noted that specific implementation of the abovementioned process is as stated in the first condition and will not be elaborated herein.

In a possible implementation mode, the respective cell set corresponding to each node and the measurement result of each cell are reported, which includes: the UE reports the respective cell set corresponding to each candidate node and the measurement result of each cell to the target MN through signaling related to a handover procedure. Then, the target MN configures an MCG corresponding to the target MN for the UE and determines an SCG corresponding to a target SN capable of performing configuration of dual connectivity together with the target MN according to the respective cell set corresponding to each candidate node and the measurement result of each cell, and the target MN configures the SCG of the target SN for the UE.

A specific implementation process is also as stated in the first condition and will not be elaborated herein.

In addition, in a possible implementation mode, the UE further detects secondary cell(s) of the source MN, and reports a secondary cell, which is capable of serving as a secondary cell of the target SN, among the secondary cell(s) of the source MN to the target MN such that the target MN configures part of secondary cells of the source MN into the SCG of the target SN.

### A third condition

Under the condition that the UE is in an idle state and expects to be in a dual connectivity mechanism with the node (MN) after being changed to a connected state, the method further includes: before receiving the measurement configuration information, the UE enters the connected state and, after receiving the measurement configuration information, the UE returns to the idle state. It can be understood that the measurement configuration information is required to be transmitted by the MN connected with the UE through RRC related signaling, so that the UE is required to temporally enter the connected state for transmission of the measurement configuration information and is in the idle state in a measurement process.

Under this condition, when the determination criterion information in the measurement configuration information includes the set node identifier information, the node identifier information includes an identifier of the MN and identifier information of the SN capable of performing configuration of dual connectivity together with the MN. In such case, after obtaining the at least one measured cell through measurement, the UE is able to determine, according to the identifier of the at least one measured cell and the identifier information of the SN in the measurement configuration information, the cell set corresponding to the SN capable of performing configuration of dual connectivity together with the MN, i.e., the SCG corresponding to the SN, and the measurement result of each cell. In addition, the UE is also able to obtain the MCG corresponding to the MN and an SCG corresponding to the MN through measurement.

When the determination criterion information in the measurement configuration information includes the at least one cell list of which the identifiers include the set node identifier, the at least one cell list includes a cell list of which identifiers include an identifier of the MN and a cell list of which identifiers include an identifier of the SN, so that the UE, after obtaining the at least one measured cell through measurement, is able to perform matching according to the identifier of the at least one measured cell and the cell list of which the identifiers include the identifier of the SN to determine the cell set corresponding to the SN, i.e., the SCG corresponding to the SN, and the measurement result of each cell. In addition, it can be understood that the UE, after obtaining the at least one measured cell through measurement, is also able to perform matching according to the identifier of the at least one measured cell and the cell list of which the identifiers include the identifier of the MN to determine the MCG corresponding to the MN and the SCG corresponding to the MN

Correspondingly, the operation that the respective cell set corresponding to each node and the measurement result of each cell are reported may include the following operation.

The MCG and SCG corresponding to the MN (i.e., the MCG corresponding to the MN and the SCG corresponding to the MN), the SN and the SCG corresponding to the SN are reported to the MN

Specifically, the UE reports the respective cell set corresponding to each node and the measurement result of each cell to the MN through a connection request transmitted to the MN. It can be understood that the MN, after receiving the connection request, configures the MCG and SCG corresponding to the MN for the UE and configures the SCG corresponding to the SN for the UE, so that it is unnecessary to trigger a process that the MN independently configures the SCG for the UE, and a delay of secondary cell configuration is reduced.

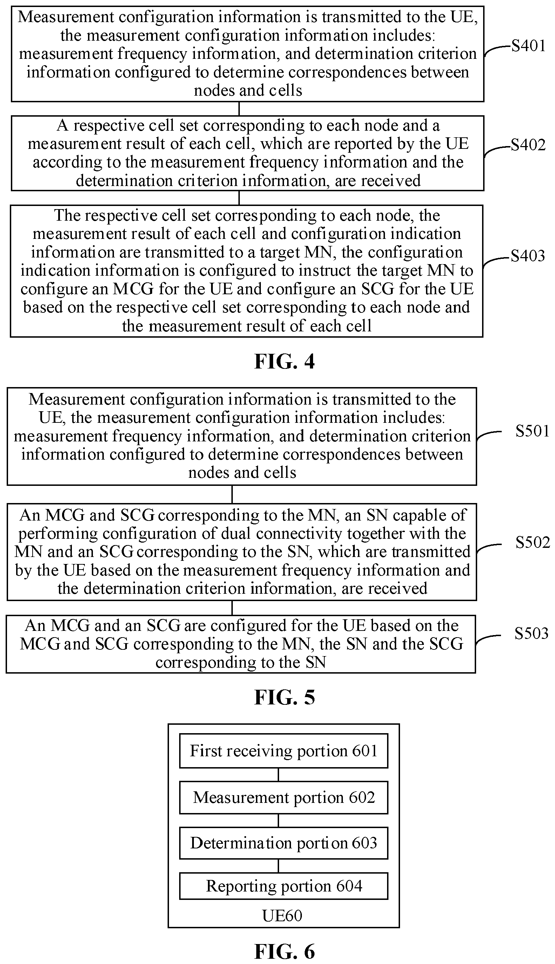

Based on the technical solution illustrated in FIG. 3, when the UE is in a handover scenario, for the source MN, referring to FIG. 4, FIG. 4 illustrates a method for secondary cell configuration according to an embodiment of the disclosure. The method is applied to the source MN. The method includes the following operations.

In S401, measurement configuration information is transmitted to the UE, the measurement configuration information includes: measurement frequency information, and determination criterion information configured to determine correspondences between nodes and cells.

In S402, a respective cell set corresponding to each node and a measurement result of each cell, which are reported by the UE according to the measurement frequency information and the determination criterion information, are received.

In S403, the respective cell set corresponding to each node, the measurement result of each cell and configuration indication information are transmitted to a target MN, here, the configuration indication information is configured to instruct the target MN to configure an MCG for the UE and configure an SCG for the UE based on the respective cell set corresponding to each node and the measurement result of each cell.

It can be understood that in the technical solution illustrated in FIG. 4, specific elaborations of the determination criterion information configured to determine the correspondences between the nodes and the cells are as made in the technical solution illustrated in FIG. 3 and will not be repeated herein.

In addition, based on the technical solution illustrated in FIG. 3, the method further includes that: a reporting rule is transmitted to the UE, here, the reporting rule is configured to instruct the UE to, responsive to detecting that the reporting rule is met, trigger the reporting of the respective cell set corresponding to each node and the measurement result of each cell.

Moreover, based on the technical solution illustrated in FIG. 3, the method further includes that: measurement indication information is transmitted to the UE, here, the measurement indication information is configured to instruct the UE to acquire an identifier of the at least one measured cell through measuring a SIB in a broadcast channel.

Based on the technical solution illustrated in FIG. 3, when the UE is in an RRC connection state changing scenario, for an MN to be connected with the UE, referring to FIG. 5, FIG. 5 illustrates a method for secondary cell configuration according to an embodiment of the disclosure. The method is applied to the MN to be connected. The method includes the following operations.

In S501, measurement configuration information is transmitted to the UE, here, the measurement configuration information includes: measurement frequency information, and determination criterion information configured to determine correspondences between nodes and cells.

In S502, an MCG and SCG corresponding to the MN, an SN capable of performing configuration of dual connectivity together with the MN and an SCG corresponding to the SN, which are transmitted by the UE based on the measurement frequency information and the determination criterion information, are received.

In S503, an MCG and an SCG are configured for the UE based on the MCG and SCG corresponding to the MN, the SN and the SCG corresponding to the SN.

For the technical solution illustrated in FIG. 5, specifically, the determination criterion information configured to determine the correspondences between the nodes and the cells in the measurement configuration information includes: identifier information of the MN and identifier information of the SN capable of performing configuration of dual connectivity together with the MN. In such case, the UE, after obtaining the at least one measured cell through measurement, is able to determine a cell set corresponding to the SN capable of performing configuration of dual connectivity together with the MN, i.e., the SCG corresponding to the SN, according to the identifier information of the SN in the measurement configuration information and an identifier of the at least one measured cell. In addition, it can be understood that the UE is also able to obtain the MCG and SCG corresponding to the MN through measurement.

In addition, the determination criterion information configured to determine the correspondences between the nodes and the cells in the measurement configuration information includes a cell list of which identifiers include an identifier of the MN and a cell list of which identifiers include an identifier of the SN. Therefore, the UE, after obtaining the at least one measured cell through measurement, performs matching according to the identifier of the at least one measured cell and the cell list of which the identifiers include the identifier of the SN to determine the cell set corresponding to the SN, i.e., the SCG corresponding to the SN, and the measurement result of each cell. Moreover, it can be understood that the UE, after obtaining the at least one measured cell through measurement, also performs matching according to the identifier of the at least one measured cell and the cell list of which the identifiers include the node identifier of the MN to determine the MCG and SCG corresponding to the MN

For the technical solution illustrated in FIG. 5, specifically, the operation that the MCG and SCG corresponding to the MN, the SN and the SCG corresponding to the SN, which are transmitted by the UE based on the measurement frequency information and the determination criterion information, are received includes the following operations.

A connection request is received from the UE; and the MCG and SCG corresponding to the MN, the SN and the SCG corresponding to the SN are acquired through parsing the connection request.

Based on the abovementioned technical solutions, referring to FIG. 6, FIG. 6 illustrates a UE 60 according to an embodiment of the disclosure, and the UE includes a first receiving portion 601, a measurement portion 602, a determination portion 603 and a reporting portion 604.

The first receiving portion 601 is configured to receive measurement configuration information, here, the measurement configuration information includes: measurement frequency information, and determination criterion information configured to determine correspondences between nodes and cells.

The measurement portion 602 is configured to obtain at least one measured cell through measurement according to the measurement frequency information.

The determination portion 603 is configured to determine a respective cell set corresponding to each node and a measurement result of each cell based on an identifier of the at least one measured cell and the determination criterion information.

The reporting portion 604 is configured to report the respective cell set corresponding to each node and the measurement result of each cell, here, the respective cell set corresponding to each node and the measurement result of each cell are used by an MN to configure an MCG for the UE 60, and to determine an SCG of an SN and configure the SCG of the SN for the UE 60.

In the solution, the determination criterion information configured to determine the correspondences between the nodes and the cells includes: set node identifier information, or at least one cell list of which identifiers include a set node identifier.

In the solution, under the condition that the UE supports single connectivity when being connected to a source MN and supports dual connectivity after being handed over to a target MN or under the condition that the UE supports dual connectivity when being connected to the source MN and keeps supporting dual connectivity after being handed over to the target MN, the measurement configuration information is received, which includes: the measurement configuration information is received from the source MN

In the solution, the first receiving portion 601 is further configured to receive a reporting rule transmitted by the source MN

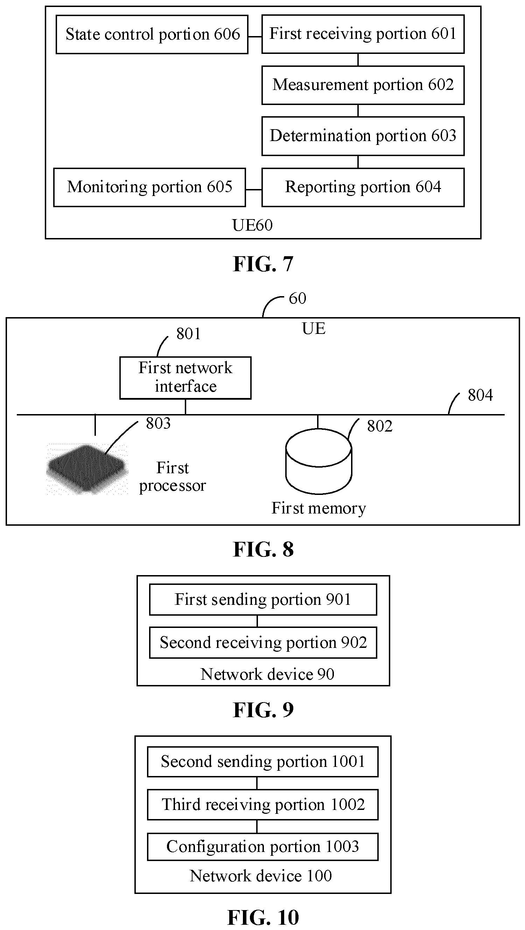

Referring to FIG. 7, the UE 60 further includes a monitoring portion 605, configured to, responsive to detecting that the reporting rule is met, trigger reporting of the respective cell set corresponding to each node and the measurement result of each cell to the target MN

In the solution, the first receiving portion 601 is configured to receive measurement indication information transmitted by the source MN and acquire the identifier of the at least one measured cell through measuring a SIB in a broadcast channel based on the measurement indication information.

In the solution, under the condition that the UE 60 supports single connectivity when being connected to the source MN and supports dual connectivity after being handed over to the target MN, when the determination criterion information in the measurement configuration information includes the set node identifier information, the node identifier information is a part of at least one cell identifier.

Under the condition that the UE supports dual connectivity when being connected to the source MN and keeps supporting connectivity after being handed over to the target MN, when the determination criterion information in the measurement configuration information includes the set node identifier information, the node identifier information is identifier information of each of at least one candidate node that has a direct interface with the target MN and capable of performing configuration of dual connectivity together with the target MN, and the identifier information of the candidate node is a part of a cell identifier; when the determination criterion information in the measurement configuration information includes the at least one cell list of which the identifiers include the set node identifier, each cell identifier in the cell list includes an identifier of the candidate node.

In the solution, the reporting portion 604 is configured to, under the condition that the UE 60 supports single connectivity when being connected to the source MN and supports dual connectivity after being handed over to the target MN, report the respective cell set corresponding to each node and the measurement result of each cell to the target MN through signaling related to a handover procedure; under the condition that the UE 60 supports dual connectivity when being connected to the source MN and keeps supporting dual connectivity after being handed over to the target MN, report the respective cell set corresponding to each candidate node and the measurement result of each cell to the target MN through the signaling of the handover procedure.

In the solution, the measurement portion 602 is further configured to, under the condition that the UE 60 supports dual connectivity when being connected to the source MN and keeps supporting dual connectivity after being handed over to the target MN, detect at least one secondary cell of the source MN and report a secondary cell capable of serving as a secondary cell of the target SN among the at least one secondary cell of the source MN to the target MN

In the solution, referring to FIG. 7, the UE 60 further includes a state control portion 606, configured to, before the measurement configuration information is received, enter a connected state and, after the measurement configuration information is received, return to an idle state.

In the solution, when the determination criterion information in the measurement configuration information includes the set node identifier information, the node identifier information includes an identifier of the MN and identifier information of the SN capable of performing configuration of dual connectivity together with the MN

When the determination criterion information in the measurement configuration information includes the at least one cell list of which the identifiers include the set node identifier, the at least one cell list includes a cell list of which identifiers include an identifier of the MN and a cell list of which identifiers include an identifier of the SN.

In the solution, the reporting portion 604 is configured to report the MCG corresponding to the MN, an SCG corresponding to the MN, the SN and the SCG corresponding to the SN to the MN

For the UE 60 illustrated in FIG. 6 and FIG. 7, referring to FIG. 8, FIG. 8 illustrates a specific hardware structure of the UE 60 according to an embodiment of the disclosure, and includes a first network interface 801, a first memory 802 and a first processor 803. Each component is coupled together through a bus system 804. It can be understood that the bus system 804 is configured to implement connection communication between these components. The bus system 804 includes a data bus and further includes a power bus, a control bus and a state signal bus. However, for clear description, various buses in FIG. 8 are marked as the bus system 804. The first network interface 801 is configured to receive or send a signal in a process of performing information reception or transmission with another external network element.

The first memory 802 is configured to store computer programs capable of being run on the first processor.

The first processor 803 is configured to run the computer programs to execute the operations of the technical solution illustrated in FIG. 3.

It can be understood that the first memory 802 in the embodiment of the disclosure may be a volatile memory or a nonvolatile memory, or may include both the volatile and nonvolatile memories. The nonvolatile memory may be a Read-Only Memory (ROM), a Programmable ROM (PROM), an Erasable PROM (EPROM), an Electrically EPROM (EEPROM) or a flash memory. The volatile memory may be a Random Access Memory (RAM), and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DRRAM). It is to be noted that the first memory 802 of a system and method described in the disclosure is intended to include, but not limited to, memories of these and any other proper types.

The first processor 803 may be an integrated circuit chip with a signal processing capability. In an implementation process, each operation of the method may be completed by an integrated logic circuit of hardware in the first processor 803 or an instruction in a software form. The first processor 803 may be a universal processor, a Digital Signal Processor (DSP), an Application Specific Integrated Circuit (ASIC), a Field Programmable Gate Array (FPGA) or another Programmable Logic Device (PLD), discrete gate or transistor logical device and discrete hardware component. Each method, operation and logical block diagram disclosed in the embodiments of the disclosure may be implemented or executed. The universal processor may be a microprocessor or the processor may also be any conventional processor and the like. The operations of the method disclosed in combination with the embodiments of the disclosure may be directly embodied to be executed and completed by a hardware decoding processor or executed and completed by a combination of hardware and software modules in the decoding processor. The software module may be located in a mature storage medium in this field, such as a RAM, a flash memory, a ROM, a PROM or EEPROM and a register. The storage medium is located in the first memory 802. The first processor 803 reads information in the first memory 802 and completes the operations of the method in combination with hardware.

It can be understood that these embodiments described in the disclosure may be implemented by hardware, software, firmware, middleware, a microcode or a combination thereof. In case of implementation with the hardware, the processing unit may be implemented in one or more ASICs, DSPs, DSP Devices (DSPDs), PLDs, FPGAs, universal processors, controllers, microcontrollers, microprocessors, other electronic units configured to execute the functions in the disclosure or combinations thereof.

In case of implementation with the software, the technology of the disclosure may be implemented through the modules (for example, processes and functions) executing the functions in the disclosure. A software code may be stored in the memory and executed by the processor. The memory may be implemented in the processor or outside the processor.

Based on the abovementioned technical solutions, referring to FIG. 9, FIG. 9 illustrates a composition of a network device 90 according to an embodiment of the disclosure. The network device may be a source MN, and includes a first sending portion 901 and a second receiving portion 902.

The first sending portion 901 is configured to transmit measurement configuration information to UE, here, the measurement configuration information includes: measurement frequency information, and determination criterion information configured to determine correspondences between nodes and cells.

The second receiving portion 902 is configured to receive a respective cell set corresponding to each node and a measurement result of each cell, which are reported by the UE according to the measurement frequency information and the determination criterion information.

The first sending portion 901 is further configured to transmit the respective cell set corresponding to each node, the measurement result of each cell and configuration indication information to a target MN, here, the configuration indication information is configured to instruct the target MN to configure an MCG for the UE and configure an SCG for the UE based on the respective cell set corresponding to each node and the measurement result of each cell.

In the solution, the first sending portion 901 is further configured to transmit a reporting rule to the UE, here, the reporting rule is configured to instruct the UE to, responsive to detecting that the reporting rule is met, trigger reporting of the respective cell set corresponding to each node and the measurement result of each cell.

In the solution, the first sending portion 901 is further configured to transmit measurement indication information to the UE, here, the measurement indication information is configured to instruct the UE to acquire an identifier of a measured cell through measuring a SIB in a broadcast channel.

Based on the abovementioned technical solutions, referring to FIG. 10, FIG. 10 illustrates a composition of a network device 100 according to an embodiment of the disclosure. The network device 100 may be an MN to be connected, and includes a second sending portion 1001, a third receiving portion 1002 and a configuration portion 1003.

The second sending portion 1001 is configured to transmit measurement configuration information to UE, here, the measurement configuration information includes: measurement frequency information, and determination criterion information configured to determine correspondences between nodes and cells.

The third receiving portion 1002 is configured to receive an MCG and SCG corresponding to the MN, an SN capable of performing configuration of dual connectivity together with the MN and an SCG corresponding to the SN, which are transmitted by the UE based on the measurement frequency information and the determination criterion information.

The configuration portion 1003 is configured to configure an MCG and an SCG for the UE based on the MCG and SCG corresponding to the MN, the SN and the SCG corresponding to the SN.

In the solution, the determination criterion information in the measurement configuration information includes identifier information of the MN and identifier information of the SN capable of performing configuration of dual connectivity together with the MN

Or, the determination criterion information includes a cell list of which identifiers include an identifier of the MN and a cell list of which identifiers include an identifier of the SN.

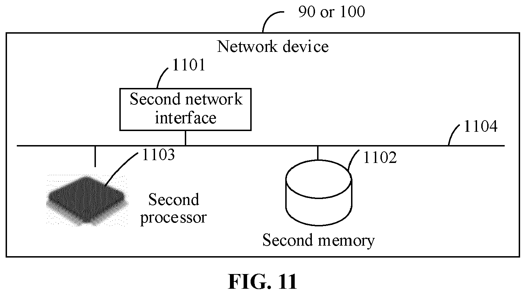

For the network devices 90 and 100, referring to FIG. 11, FIG. 11 illustrates a specific hardware structure of the network device 90 or the network device 100 according to an embodiment of the disclosure, and includes a second network interface 1101, a second memory 1102 and a second processor 1103.

The second network interface 1101 is configured to receive or send a signal in a process of performing information reception or transmission with another external network element.

The second memory 1102 is configured to store computer programs capable of being run on the second processor 1103.

The second processor 1103 is configured to run the computer programs to execute the operations of the technical solution illustrated in FIG. 4 or FIG. 5.

It can be understood that specific descriptions about each part in the specific hardware structure of the UE 110 are as illustrated in FIG. 8 and elaborations are omitted herein.

Based on the same inventive concept of the abovementioned embodiments, an embodiment of the disclosure also provides a computer storage medium, which stores information transmission programs that, when executed by at least one processor, to implement the operations of technical solution illustrated in FIG. 3 or FIG. 4 or FIG. 5.

The above is only the preferred embodiments of the disclosure and not intended to limit the scope of protection of the disclosure.

### INDUSTRIAL APPLICABILITY

In the embodiments of the disclosure, the UE, after obtaining the determination criterion information configured to determine the correspondences between the nodes and the cells, may determine the node(s) corresponding to the at least one measured cell obtained through measurement and report the respective cell set corresponding to each node and the measurement result of each cell to enable the MN to configure a connection with the UE and configure the SCG of the SN according to the respective cell set corresponding to each node and the measurement result of each cell. Therefore, it is unnecessary to trigger a process that the MN independently configures the SCG for the UE, and a delay of secondary cell configuration is reduced.

## Claims

1. A method for secondary cell configuration, applied to User Equipment (UE), the method comprising:
receiving measurement configuration information, the measurement configuration information comprising: measurement frequency information, and determination criterion information configured to determine correspondences between nodes and cells;
obtaining at least one measured cell through measurement according to the measurement frequency information;
determining a respective cell set corresponding to each node and a measurement result of each cell based on an identifier of the at least one measured cell and the determination criterion information; and
reporting the respective cell set corresponding to each node and the measurement result of each cell, the respective cell set corresponding to each node and the measurement result of each cell being used by a Master Node (MN) to configure a Master Cell Group (MCG) for the UE, and to determine a Secondary Cell Group (SCG) of a Secondary Node (SN) and configure the SCG of the SN for the UE.

2. The method of claim 1, wherein the determination criterion information configured to determine the correspondences between the nodes and the cells comprises: set node identifier information, or at least one cell list of which identifiers comprise a set node identifier.

3. The method of claim 1 or 2, wherein under the condition that the UE supports single connectivity when being connected to a source MN and supports dual connectivity after being handed over to a target MN, or under the condition that the UE supports dual connectivity when being connected to the source MN and keeps supporting dual connectivity after being handed over to the target MN, receiving the measurement configuration information comprises:
receiving the measurement configuration information from the source MN

4. The method of claim 3, further comprising:
receiving a reporting rule transmitted by the source MN; and
responsive to detecting that the reporting rule is met, triggering the reporting of the respective cell set corresponding to each node and the measurement result of each cell to the target MN

5. The method of claim 3, wherein receiving the measurement configuration information comprises:
receiving measurement indication information transmitted by the source MN; and
acquiring the identifier of the at least one measured cell through measuring a System Information Block (SIB) in a broadcast channel based on the measurement indication information.

6. The method of claim 3, wherein under the condition that the UE supports single connectivity when being connected to the source MN and supports dual connectivity after being handed over to the target MN, when the determination criterion information in the measurement configuration information comprises set node identifier information, the node identifier information is a part of at least one cell identifier;
under the condition that the UE supports dual connectivity when being connected to the source MN and supports dual connectivity after being handed over to the target MN,
when the determination criterion information in the measurement configuration information comprises set node identifier information, the node identifier information is identifier information of each of at least one candidate node that has a direct interface with the target MN and is capable of performing configuration of dual connectivity together with the target MN, and the identifier information of the candidate node is a part of a cell identifier;
when the determination criterion information in the measurement configuration information includes at least one cell list of which identifiers comprise a set node identifier, each cell identifier in the cell list comprises an identifier of the candidate node.

7. The method of claim 3, wherein reporting the respective cell set corresponding to each node and the measurement result of each cell comprises:
under the condition that the UE supports single connectivity when being connected to the source MN and supports dual connectivity after being handed over to the target MN, reporting the respective cell set corresponding to each node and the measurement result of each cell to the target MN through signaling related to a handover procedure;
under the condition that the UE supports dual connectivity when being connected to the source MN and keeps supporting dual connectivity after being handed over to the target MN, reporting the respective cell set corresponding to each candidate node and the measurement result of each cell through signaling of a handover procedure.

8. The method of claim 3, further comprising:
under the condition that the UE supports dual connectivity when being connected to the source MN and keeps supporting dual connectivity after being handed over to the target MN, detecting at least one secondary cell of the source MN, and reporting a secondary cell, which is capable of serving as a secondary cell of a target SN, among the at least one secondary cell of the source MN to the target MN

9. The method of claim 1, under the condition that the UE is in an idle state and expects to be in dual connectivity mechanism with the MN after being changed to a connected state, the method further comprising:
entering the connected state before receiving the measurement configuration information; and
returning to the idle state after receiving the measurement configuration information.

10. The method of claim 9, wherein
when the determination criterion information in the measurement configuration information comprises set node identifier information, the node identifier information comprises an identifier of the MN and identifier information of the SN capable of performing configuration of dual connectivity together with the MN;
when the determination criterion information in the measurement configuration information comprises at least one cell list of which identifiers comprise a set node identifier, the at least one cell list comprises a cell list of which identifiers comprise an identifier of the MN and a cell list of which identifiers comprise an identifier of the SN.

11. The method of claim 10, wherein reporting the respective cell set corresponding to each node and the measurement result of each cell comprises:
reporting, to the MN, the MCG corresponding to the MN, an SCG corresponding to the MN, the SN and the SCG corresponding to the SN.

12. A method for secondary cell configuration, applied to a source Master Node (MN), the method comprising:
transmitting measurement configuration information to User Equipment (UE), the measurement configuration information comprising: measurement frequency information, and determination criterion information configured to determine correspondences between nodes and cells;
receiving a respective cell set corresponding to each node and a measurement result of each cell, which are reported by the UE according to the measurement frequency information and the determination criterion information; and
transmitting the respective cell set corresponding to each node, the measurement result of each cell and configuration indication information to a target MN, the configuration indication information being configured to instruct the target MN to configure a Master Cell Group (MCG) for the UE and configure a Secondary Cell Group (SCG) for the UE based on the respective cell set corresponding to each node and the measurement result of each cell.

13. The method of claim 12, further comprising:
transmitting a reporting rule to the UE, the reporting rule being configured to instruct the UE to, responsive to detecting that the reporting rule is met, trigger reporting of the respective cell set corresponding to each node and the measurement result of each cell.

14. The method of claim 12, further comprising:
transmitting measurement indication information to the UE, the measurement indication information being configured to instruct the UE to acquire an identifier of a measured cell through measuring a System Information Block (SIB) in a broadcast channel.

15. A method for secondary cell configuration, applied to a Master Node (MN) to be connected, the method comprising:
transmitting measurement configuration information to User Equipment (UE), the measurement configuration information comprising: measurement frequency information, and determination criterion information configured to determine correspondences between nodes and cells;
receiving a Master Cell Group (MCG) corresponding to the MN, a Secondary Cell Group (SCG) corresponding to the MN, a Secondary Node (SN) capable of performing configuration of dual connectivity together with the MN and an SCG corresponding to the SN, which are transmitted by the UE based on the measurement frequency information and the determination criterion information; and
configuring an MCG and an SCG for the UE based on the MCG corresponding to the MN, the SCG corresponding to the MN, the SN and the SCG corresponding to the SN.

16. The method of claim 15, wherein the determination criterion information in the measurement configuration information comprises identifier information of the MN and identifier information of the SN capable of performing configuration of dual connectivity together with the MN; or, the determination criterion information comprises a cell list of which identifiers comprise an identifier of the MN and a cell list of which identifiers comprise an identifier of the SN.

17. User Equipment (UE), comprising a first receiving portion, a measurement portion, a determination portion and a reporting portion, wherein
the first receiving portion is configured to receive measurement configuration information, the measurement configuration information comprising: measurement frequency information, and determination criterion information configured to determine correspondences between nodes and cells;
the measurement portion is configured to obtain at least one measured cell through measurement according to the measurement frequency information;
the determination portion is configured to determine a respective cell set corresponding to each node and a measurement result of each cell based on an identifier of the at least one measured cell and the determination criterion information; and
the reporting portion is configured to report the respective cell set corresponding to each node and the measurement result of each cell, the respective cell set corresponding to each node and the measurement result of each cell being used by a Master Node (MN) to configure a Master Cell Group (MCG) for the UE, and to determine a Secondary Cell Group (SCG) of a Secondary Node (SN) and configure the SCG of the SN for the UE.

18. A network device, comprising a first sending portion and a second receiving portion, wherein
the first sending portion is configured to transmit measurement configuration information to User Equipment (UE), the measurement configuration information comprising: measurement frequency information, and determination criterion information configured to determine correspondences between nodes and cells;
the second receiving portion is configured to receive a respective cell set corresponding to each node and a measurement result of each cell, which are reported by the UE according to the measurement frequency information and the determination criterion information; and
the first sending portion is further configured to transmit the respective cell set corresponding to each node, the measurement result of each cell and configuration indication information to a target Master Node (MN), the configuration indication information being configured to instruct the target MN to configure a Master Cell Group (MCG) for the UE and configure a Secondary Cell Group (SCG) for the UE based on the respective cell set corresponding to each node and the measurement result of each cell.

19. A network device, comprising a second sending portion, a third receiving portion and a configuration portion, wherein
the second sending portion is configured to transmit measurement configuration information to User Equipment (UE), the measurement configuration information comprising: measurement frequency information, and determination criterion information configured to determine correspondences between nodes and cells;
the third receiving portion is configured to receive a Master Cell Group (MCG) and Secondary Cell Group (SCG) corresponding to a Master Node (MN), a Secondary Node (SN) capable of performing configuration of dual connectivity together with the MN and an SCG corresponding to the SN, which are transmitted by the UE based on the measurement frequency information and the determination criterion information; and
the configuration portion is configured to configure an MCG and an SCG for the UE based on the MCG and SCG corresponding to the MN, the SN and the SCG corresponding to the SN.

20. User Equipment (UE), comprising a first network interface, a first memory and a first processor, wherein
the first network interface is configured to receive or send a signal in a process of performing information reception or transmission with another external network element;
the first memory is configured to store computer programs capable of being run on the first processor; and
the first processor is configured to run the computer programs to execute the method of any one of claims 1-11.

21. A network device, comprising a second network interface, a second memory and a second processor, wherein
the second network interface is configured to receive or send a signal in a process of performing information reception or transmission with another external network element;
the second memory is configured to store computer programs capable of being run on the second processor; and
the second processor is configured to run the computer programs to execute the method of any one of claims 12-14 or any one of claims 15-16.

22. A computer storage medium, storing information transmission programs that, when executed by at least one processor, to perform the method of any one of claims 1-11 or any one of claims 12-14 or any one of claims 15-16.
